# EUROPEAN PATENT APPLICATION

(11) **EP 1 981 182 A1**
(43) Date of publication of application: **15.10.2008**
(21) Application number: 07707498.7
(22) Date of filing: 26.01.2007
(51) Int. Cl.: H04B 7/26, G08G 1/09, H04Q 7/20, H04Q 7/38

(54) **APPLIED SERVICE PROVIDING DEVICE AND ROAD-TO-VEHICLE COMMUNICATION SYSTEM USING THIS APPLIED SERVICE PROVIDING DEVICE**

(30) Priority: 01.02.2006 JP 2006024614
(71) Applicant: Mitsubishi Electric Corporation, Chiyoda-ku Tokyo 100-8310 (JP)
(72) Inventor: IKAWA, Masahiko, Chiyoda-ku, Tokyo 100-8310 (JP); GOTO, Yukio, Chiyoda-ku, Tokyo 100-8310 (JP); ARAKI, Hiroshi, Chiyoda-ku, Tokyo 100-8310 (JP); IGARASHI, Yuji, Chiyoda-ku, Tokyo 100-8310 (JP); TSUDA, Yoshiaki, Chiyoda-ku, Tokyo 100-8310 (JP)
(74) Representative: Popp, Eugen
(86) International application number: PCT/JP2007/051266
(87) International publication number: WO 2007/088787

(57) **Abstract**

In a vehicle wireless communication system providing service applications to vehicles by linkage of plural base stations, it was necessary to use base stations having different configurations at respective installation places in order to change the service to be provided at respective base stations according to installation places of respective base stations or service statuses of other base stations. Accordingly, a traffic service data output unit 30 (traffic data output unit) is provided with a protocol processing section 330 providing the communication service common to respective services, a modem 332 and a mobile station/base station information management section 331, and the mobile station/base station information management section 331 is provided with a mechanism notifying IDs of a mobile station unit 10 and a base station unit 20 to a service application. In addition, the modem 332 is provided with a mechanism of transferring transmission information to the corresponding base station 10 by adding a proper link address based on the IDs of the mobile station 10 and the base station unit 20.

## Description

### Technical Field

The invention relates to an traffic service data output unit providing (transmitting) service applications to a wireless transmitter/receiver mounted on a vehicle driving on the road and a vehicle wireless communication system using the traffic service data output unit.

### Background Art

There is a system of providing various wireless information (including mutual communication) to wireless electronic equipment (for example, an ETC device, a navigation device, a device for vehicle information and communication system (VICS), a cellular phone device and the like, which are generically called mobile stations) mounted on movable bodies (vehicles) driving on the road (including vehicles stopped at parking areas). Hereinafter, the wireless information will be called service applications.

In a vehicle wireless communication system providing service applications from plural base station devices installed at different points respectively to vehicles near respective base stations, the type of services to be provided (classification of services (information supply/information collection)), or the contents of information to be provided even in the case of the same type of service have to be different in accordance with installation locations of respective base station devices.

For example, in the case that there is a branch point in a highway, vehicle information provided from the base station before the branch point is naturally different from vehicle information provided from the base station after the branch point.

A unit which can provide a particular service application is called a traffic service data output unit, which is abbreviated to a traffic data output unit. Plural traffic data output units are installed for providing plural different service applications. When a mobile station is connected to a nearby base station (for example, "A" base station) and requests a particular service application, the "A" base station is connected to a corresponding traffic data output unit and provides the service application to the mobile station, however, the mobile station will move in the course of time and will be connected to a different base station (for example, "B" base station) . At this time, it takes time to establish "B" base station connection anew, therefore, communication stops temporarily. In order to solve the disadvantage, a technology is disclosed in Patent Document 1, in which plural base station units are connected to one traffic data output unit as well as a function of notifying mobile station identifiers of mobile stations coming close to base stations to the traffic data output unit is given to respective base station units, a transfer control means based on the mobile station identifiers is included in the traffic data output unit, and transmission of the service application to the mobile station from the traffic data output unit is automatically transferred to the base station which has notified the mobile station identifier, as a result, a single mobile station can continuously perform communication without stop, while using plural base stations.

In the technology of Patent Document 1, it is possible to provide a single (the same contents) service continuously only based on the mobile station identifier by using plural base stations, however, the position of the mobile station is just administered inside the transfer control means automatically on the traffic data output unit for identifying the data transfer destination. Accordingly, the traffic data output unit does not have a configuration in which the unit recognizes that the mobile station exists under which base station at present, therefore, there is a problem that the service contents are not able to be changed according to installation places of base station units or service statuses of other base station units (such as a status of a vehicle under a certain base station).

The technology is premised on one-to-one communication between the traffic data output unit and the mobile station, therefore, there is a problem that it is not be able to be used for an application that multicasting service is performed by using multicasting service to all mobile stations existing in a radio wave zone of a certain base station.

In Patent Document 2, a technology is disclosed, in which plural base station units are connected by a network, and a position, speed, a direction and the like of a vehicle are notified from a base station unit which has detected the vehicle to other adjacent plural base station units by using multicasting service, then, the notified base station unit judges whether information is provided to a vehicle entering to a radio wave zone of itself, or an already-existing vehicle based on the received information. It becomes possible to dynamically change information to be provided according to base station units by using the technology, however, as multicasting service is used as means for delivering the vehicle status in the self station to other base station units, there is a problem that a large amount of unnecessary communication is generated when the information amount to be notified is increased. In addition, the judgment whether information is transferred to the mobile station or not is performed by the base station unit, and data to be the reference for judgment of transfer has to be acquired/generated by the base station unit, therefore, dedicated base stations are necessary for respective installation places or service types, which causes problems that costs of respective base station units increase and that all base station units have to be changed when changing the service to be provided.
Patent Document 1: JP-A-2005-117342
Patent Document 2: JP-A-2002-49988

### Disclosure of the Invention

### Problems that the Invention is to Solve

As described above, in a vehicle wireless communication system providing service applications to vehicles by linkage of plural base station unit, there is a problem that, when the service to be provided is dynamically (may be statically) changed at each base station according to installation places of respective base station units or service statuses of other base station units, dedicated base station units are necessary for respective installation places or the service types/service contents and the type and the number of base stations will be enormously increased.

The present invention has been made for solving the above problem, and an object thereof is to allow base stations in all installation places to be used in common even when the type or the contents of services to be provided are different according to installation places.

### Means for Solving the Problems

A vehicle wireless communication system of the invention includes plural base stations installed along roads, each having a wireless section performing wireless communication with mobile stations mounted on vehicles and a modem connecting to a network, in which the modem outputs individual base station identification information and mobile station identification information received from the mobile stations to the network, and receives mobile station identification information as a transmission destination and service data through the network, and in which the wireless section transmits the service data to the mobile station based on the mobile station identification information as the transmission destination, and an traffic service data output unit connected to the plural base stations through the network, having an application section including plural service data to be provided to the mobile station and selecting service data corresponding to the base station based on the base station identification information received from the base station and a protocol processing section outputting service data selected by the application section to the base station having the identification information of the base station through the network, indicating the mobile station having the base station identification information received from the base station as a transmission destination.

### Advantage of the Invention

According to the vehicle wireless communication system of the invention, processing according to installation places of base stations or service statuses of other base station units is performed on service applications of the traffic service data output unit by using base station identification information notified by the base station information notification means, and the base station unit only has to include the common function of transmitting mobile station identification information received from mobile stations to the traffic service data output unit and the function of transferring transmission data transferred from the traffic service data output unit by the wireless communication function, therefore, all base stations can be used in common. In addition, the communication between the base station unit and the traffic service data output unit (information acquisition from mobile stations and information delivery to mobile stations) is performed by one-to-one communication between the corresponding base station unit and the traffic service data output unit, therefore, unnecessary communication is not generated in the road side network.

Additionally, since there is provided with a function of transferring data as multicasting data, when the data is received on the traffic service data output unit with base station identification information as a transmission destination, a prominent advantage which has not exist before can be obtained, that is, it becomes possible that information necessary in common to all vehicles existing in the radio wave zone of a certain base station is efficiently delivered.

### Brief Description of the Drawings

[Fig. 1] Fig. 1 is the whole configuration view of a vehicle wireless communication system according to Embodiment 1 of the invention.
[Fig. 2] Fig. 2 shows internal configuration diagrams of respective units forming the vehicle wireless communication system according to Embodiment 1 of the invention.
[Fig. 3] Fig. 3 is an internal configuration diagram of a protocol processing section on a traffic data output unit of the invention.
[Fig. 4] Fig. 4 is a sequence diagram explaining operations of Embodiment 1 of the invention.
[Fig. 5] Fig. 5 is a flowchart explaining operations of Embodiment 1 of the invention.
[Fig. 6] Fig. 6 is a flowchart explaining operations of Embodiment 1 of the invention.
[Fig. 7] Fig. 7 is a road status view explaining a vehicle wireless communication system according to Embodiment 2 of the invention.
[Fig. 8] Fig. 8 is the whole configuration view of a vehicle wireless communication system according to Embodiment 3 of the invention.
[Fig. 9] Fig. 9 is an internal configuration diagram of a traffic data output unit in the vehicle wireless communication system according to Embodiment 3 of the invention.

### Best Mode for Carrying Out the Invention

### Embodiment 1

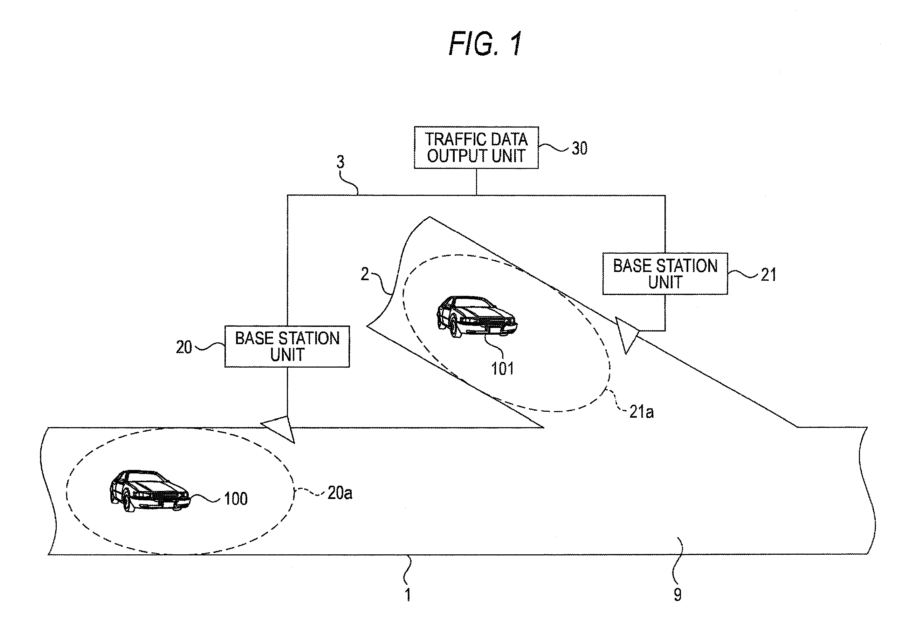

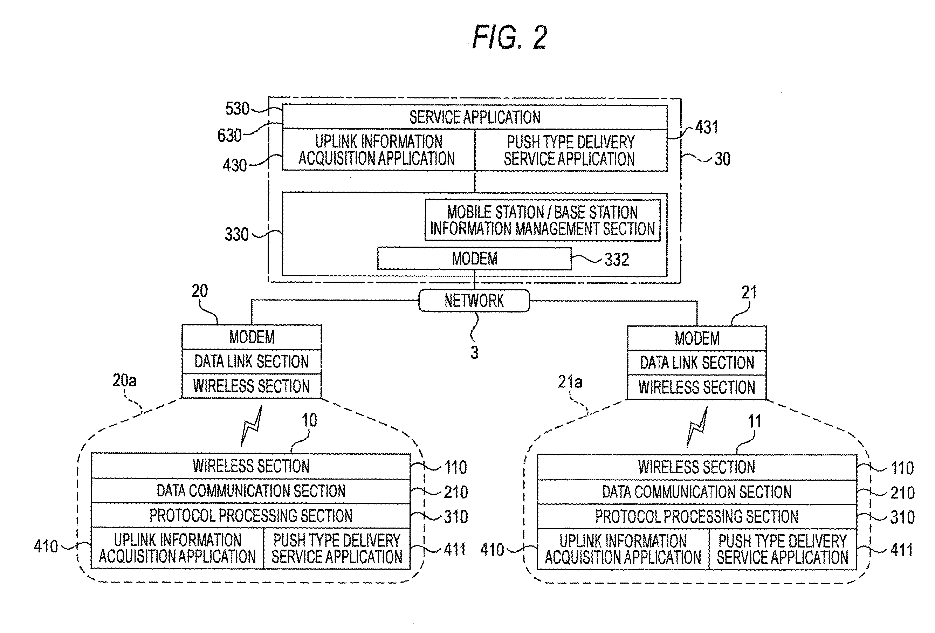

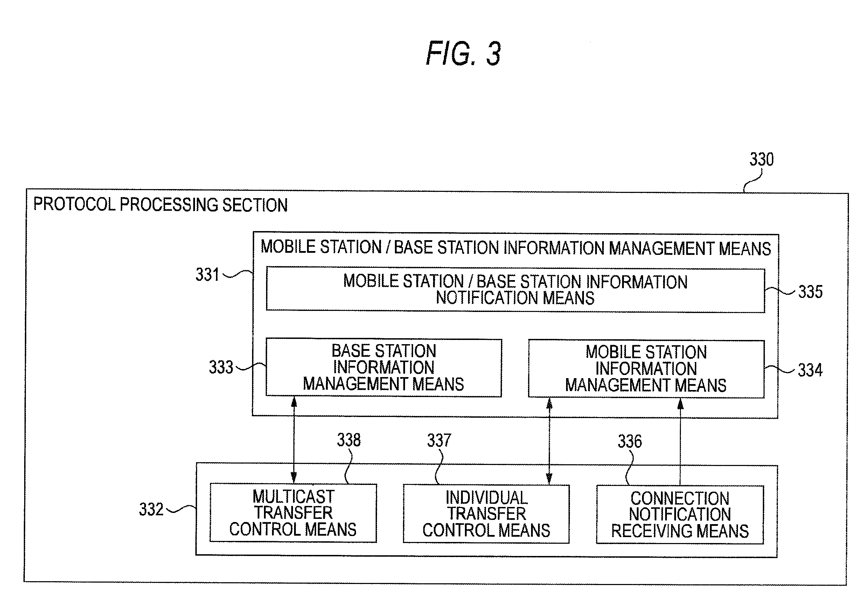

Fig. 1 is an explanatory view for explaining a configuration of a vehicle wireless communication system according to Embodiment 1 of the invention, and Fig. 2 is a block diagram for explaining respective function elements of respective units forming the vehicle wireless communication system of Fig. 1. Fig. 3 is a block diagram for explaining respective function elements of a protocol processing unit on a traffic data output unit (an traffic service data output unit) 30 described in Fig. 2.

To help understanding, the explanation will be made by using a simple case in which two one-way roads meet in Embodiment 1, and by using a case at an intersection of an general both-way two-traffic lane roads in Embodiment 2.

In Fig. 1, a road 1 and a road 2 cross each other (meet) , vicinity information of opponent vehicles will be given before reaching an intersection 9 to respective vehicles which are not able to see and recognize each other, assuming that movable bodies (vehicles) 100, 101 driving on respective roads are blind each other (they are not able to see and recognize each other visually) . A mobile station unit 10 is mounted on the movable body (hereinafter, sometimes referred to as the vehicle) 100, and a mobile station unit 11 is mounted on a movable body (hereinafter, sometimes referred to as the vehicle) 101, respectively. A base station unit 20 installed at a position a predetermined distance (for example, several 100m) apart from the intersection 9 on the road 1 (or the road side) has a radio wave zone 20a of wireless communication. The base station unit 20 acquires the vicinity information to the intersection 9 such as speed, a position, a type of the vehicle and the like (hereinafter, referred to as vehicle information) within the radio wave zone 20a from the mobile station unit 10. The acquired vehicle information of the vehicle 100 is delivered to the vehicle 101 within a radio wave zone 21a of a base station unit 21 installed at a position a predetermined distance (similarly, several 100m) apart from the intersection 9 on the road 2 (or the road side) by wireless communication in real time, accordingly, the vehicle 101 can know the vicinity information of the vehicle 100 before reaching the intersection 9, thereby preventing accidents from occurring such as a crash when passing each other.

In Fig. 1, the case that two roads cross each other is explained for convenience of explanation, however, in a common intersection 9 having roads in four directions, there are plural base stations. In plural radio wave zones, multicasting service is performed by wireless communication in real time, thereby providing information of the vehicle approaching from one road to a blind spot to all vehicles on other roads. It is possible to deliver information from the vehicle 101 to the direction of the vehicle 100 in the same manner. Accordingly, safety driving can be assisted.

The base station units 20, 21 installed on the roads 1, 2 are wireless communication base station units performing short range wireless communication such as DSRC (Dedicated Short Range Communication) , having radio wave zones (20a, 21a) of an approximately several 10m in radius, respectively. The radio wave zones 20a, 21a do not overlap each other.

Vehicle radios (mobile station units 10, 11 shown in Fig. 2) for performing communication with the base station units 20, 21 respectively by the short range wireless communication are mounted on the vehicle 100 driving on the road 1 and the vehicle 101 driving on the road 2. The mobile station units 10, 11 include plural (two kinds in Fig. 2) local applications (in the drawing, two kinds of an uplink information acquisition application 410 and a push type delivery service application 411 are shown (the details will be described later)). The mobile station units 10, 11 further include a protocol processing section 310 performing communication processing common to these plural local applications, a data link section 210 performing communication with the base station units 20, 21 and a wireless section 110 performing wireless transmission and reception. The mobile station unit 10 performs communication with the based station unit 20 within the radio wave zone 20a and the mobile station unit 11 performs communication with the base station unit 21 within the radio wave zone 21a. Respective configurations of the mobile station units 10, 11 are the same except IDs given to the respective units.

The uplink information acquisition application 410 and the push type delivery service application 411 will be explained.

The uplink information acquisition application 410 is an application for allowing a vehicle to transmit vehicle information to the base station, that is, information of the vehicle which is driving, such as speed (approaching speed to the intersection 9), a position, acceleration/deceleration, a type of the vehicle and the like.

The push type delivery service application 411 is an application for delivering the vehicle information of the vehicle which is about to come close to the intersection 9 from another road to vehicles driving on other roads.

The traffic data output unit (a traffic service data output unit) 30 is an unit disposed at the road side, or a not-shown administration building on the road, including application software (referred to as service application) and service data for providing various services (for example, assistance for safety driving such as the above-described providing of vehicle information at the intersection 9 on the road, guidance of unoccupied spaces/areas in a parking lot and the like) to vehicles by linkage of plural base station units (20, 21) installed near the intersection 9 (which will be described later). A configuration of the traffic data output unit 30 can be largely divided into an application section 630 and a protocol processing section 330 as shown in Fig. 2.

The traffic data output unit 30 is connected with plural base station units 20, 21 through a network 3 (base stations have network connection means) , in which a service application 530 in the application section 630 combines plural local applications (indicating an uplink information acquisition application 430 and an push type delivery service application 431 in Fig. 2) and executes them, thereby executing these services.

The uplink information acquisition application 430 and the push type delivery service application 431 perform communication with (acquisition of information, delivery of information) with the mobile station units 10, 11 using the protocol processing section 330 performing communication processing which is common to respective local applications. Through the number of local applications is generally greater than this, only two applications are shown in this case for convenience of explanation.

A configuration of the protocol processing section 330 on the traffic data output unit 30 is shown in Fig. 3. The protocol processing section 330 includes a mobile station/base station information management section 331 managing information of base station units and mobile station units and a modem 332 performing communication by selecting an opponent station to be communicated, in addition to the function of performing given protocol processing prescribed between the protocol processing sections 310 of the mobile station units 10, 11.

The mobile station/base station information management section 331 includes a base station information management means 333 managing information of base stations such as identifiers of base station units (base station IDs) , addresses of base station units on the network 3 and link addresses used in the multicasting service performed with respect to plural base stations. The mobile station/base station information management section 331 further includes a mobile station information management means 334 managing mobile station information such as mobile station IDs received through the base station units 20, 21, link addresses thereof (addresses on wireless communication) and information of the base station units as transmission sources. In addition, a mobile station/base station information notification means 335 is also included, which notifies mobile station information (mobile station IDs and the like described above) and the base station information (base station IDs and the like) with respect to the application section 630 at the time of connecting to the mobile station or at the time of request from the application section 630.

The modem 332 includes a connection notification receiving means 336 receiving connection/disconnection notification of the mobile stations 10, 11 from the base station units 20, 21 and performing registration to the mobile station management means 333 and the base station information management means 334. The modem 332 also includes an individual transfer control means 337 judging at which base station' s radio wave zone a mobile station to be a communication opponent (an opponent to which information is delivered) exists, when receiving the mobile station ID from the application section 630 as a transmission destination, selecting the base station with which the communication is available and transferring data. The modem 332 further includes a multicast transfer control means 338, when receiving the base station ID from the application section 630 as the transmission destination, transferring transmission data to the base station unit indicated by the base station ID as multicast data.

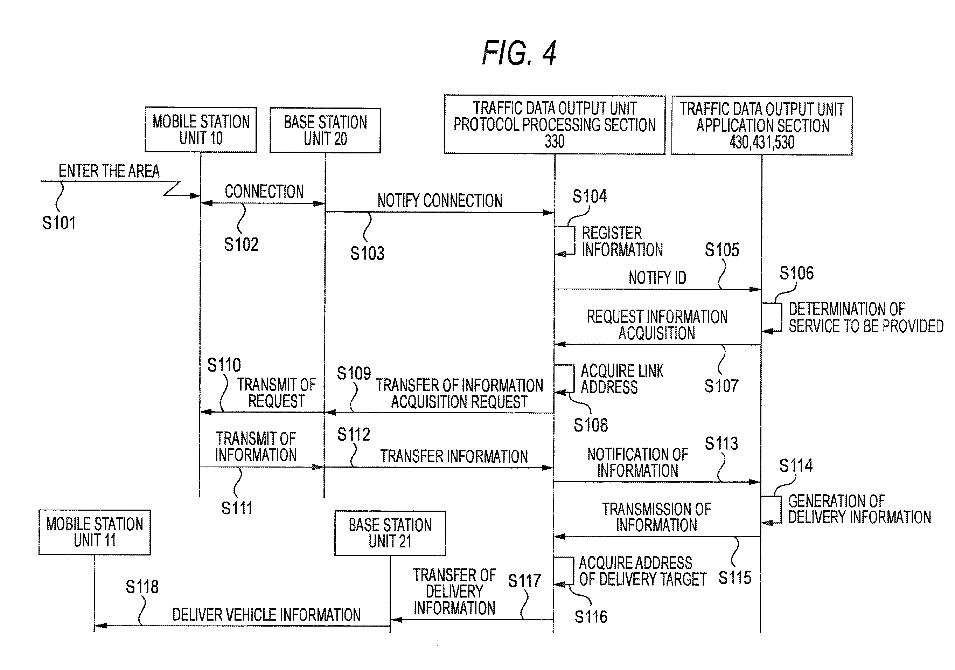

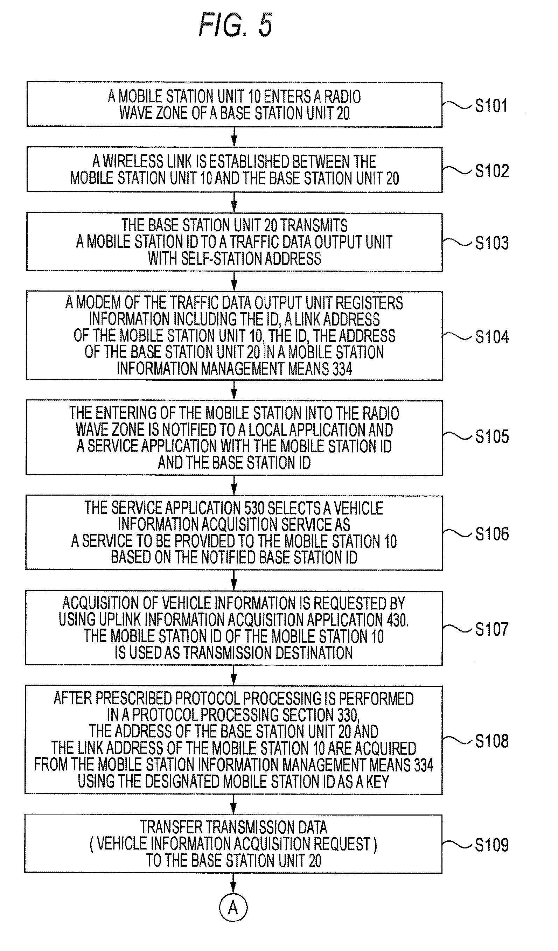

An operation flow concerning communication among the mobile station units 10, 11, the base station units 20, 21, and the traffic data output unit 30 shown in Fig. 1 is shown in a sequence diagram Fig. 4 and a flowchart Fig. 5. By using the sequence diagram Fig. 4 and the flowchart Fig. 5, typical operations in the vehicle wireless communication system of Embodiment 1 will be explained. Names of units and the like written in blocks in the sequence diagram Fig. 4 show signal source units and signal destination units of arrows indicating operations written along lines extending below respective blocks. The same numeral of an operation step written in Fig. 4 and Fig. 5 shows the same operation.

In the following explanation, the base station installed on the road 1 is referred to as a first base station 20 and the base station 21 installed on the road 2 is referred to as a second base station 21. The radio wave zone of the first base station 20 is referred to as a first radio wave zone 20a and the radio wave zone of the second base station 21 is referred to a second radio wave zone 21a.

In Step S101, the vehicle 100 enters the first radio wave zone 20a of the first base station unit 20.

In Step S102, a wireless link is established between the mobile station unit 10 and the first base station unit 20, and a first contact sequence of the short range wireless communication to be used is executed.

In Step S103, the first base station unit 20 notifies connection information (including the mobile station ID) of the mobile station unit 10 (which is called connection notification) to the modem 332 on the traffic data output unit 30. As the mobile ID used here, for example, a link address prescribed by ARIB STD-T75, or vehicle identification information prescribed by ARIB-STD-T88 and the like can be used.

In Step S104, the modem 332 registers mapping information including the mobile station ID and the link address of the mobile station unit 10, identification information (base station ID and the like) and the address on the network of the first base station unit 20 which has transmitted the ID in the mobile station information management means 334 inside the mobile station/base station information management section 331.

In Step S105, the mobile station/base station information notification means 335 notifies the entering into the radio wave zone of the vehicle 100 to the local application (the uplink information acquisition application 430 and the push type delivery service application 431) and the service application 530 with the mobile station ID and the base station ID.

In Step S106, the service application 530 on the traffic data output unit 30 selects a service to be provided to the mobile station unit 10 based on the notified base station ID.

In Step S107, the service application 530 requests acquisition of vehicle information from the mobile station unit 10 by using the uplink information acquisition application 430. At that time, the mobile station ID acquired in Step S105 is used as the transmission destination.

In step S108, the protocol processing section 330 on the traffic data output unit 30 performs prescribed protocol processing, then, acquires the address of the base station unit under which the mobile station exist and the link address used in wireless communication from the mobile station information management means 334, using the designated mobile station ID as a key.

In Step S109, the acquisition request of the vehicle information is transferred to the address of the base station unit acquired in Step S108.

In Step S110, notification is performed to the mobile unit by wireless communication.

In Step S111, the vehicle information is transmitted to the first base station unit 20 from the uplink information acquisition application 410 of the mobile station unit 10.

In Step S112, the vehicle information is transferred from the first base station unit 20 to the traffic data output unit 30.

In Step S113, the protocol processing section 330 on the traffic data output unit 30 received the vehicle information transferred in Step S112 performs prescribed protocol, and notifies the uplink information to the uplink information acquisition application 430 and the service application 530.

In Step S114, the service application 530 generates delivery information.

In Step S115, the service application 530 requests multicasting service so as to deliver the generated information simultaneously from the second base station unit 21 by using the push type delivery service application 431. At that time, the base station ID of the second base station unit 21 is designated as the transmission source.

In Step S116, The protocol processing section 330 on the traffic data output unit 30 performs prescribed protocol processing, then, refers to the base station information management means 333 to acquire an address of the base station and a multicast link address to be used for delivery, using the designated base station ID as a key. That is, in this case, the vehicle information is transmitted from the first base station of the road 1, therefore, it is judged that the information should be delivered to the second base station on the road 2.

In Step S117, the delivery information is transferred to the second base station unit.

In Step S118, the second station unit 21 which has received the delivery information delivers transmission information to all mobile stations (in the drawing, only the mobile station unit 11) existing in the radio wave zone of it self (the second radio wave zone area 21a) by using the data communication section 210 and the wireless section 110.

As described above, in the embodiment, the modem 332 is provided in the protocol processing section 330 providing the communication service common to respective services, and the mechanism notifying the mobile station ID and the base station ID to the service application and the mechanism transferring transmission information, adding proper link address to the corresponding base station based on the mobile station ID and the base station ID are provided in the modem 332, thereby allowing the base station units to have the common configuration even in the system providing different services (including multicasting distribution) according to the base station unit.

In the embodiment, it is explained that the multicasting service is used when delivering information, however, it is also possible that information which is customized according to the mobile station is delivered using individual communication by using the mobile station ID of the mobile station 11 as a destination of information delivery. At this time, a vehicle-mounted unit ID communication application or an IC card access application are mounted as the local application on the traffic data output unit 30 in addition to the uplink information acquisition application 430 and the push type delivery service application 431, and information identifying an individual such as a vehicle-mounted unit ID or an ID written in an IC card is acquired as acquired information, thereby customizing the data contents or the service contents to be delivered according the user based on the information. Accordingly, the service customized according to both a present position of the vehicle and an individual (individual vehicle) can be also provided.

One traffic data output unit 30 should be installed at one intersection, however, it is also preferable that one unit is provided with respect to plural base stations installed, for example, at two intersections existing in a very small interval (several 10m).

### Embodiment 2

In the case of Fig. 1 of Embodiment 1, the roads are one-way roads, having only two base stations, and all vehicles passing through the radio wave zones of the base stations move in the direction of the intersection 9, therefore, it is clear to which base station the vehicle information acquired from one base station should be delivered. In Embodiment 2, a delivering method in a more complicated intersection, that is, an intersection in which both-way two-traffic lane roads cross each other will be explained.

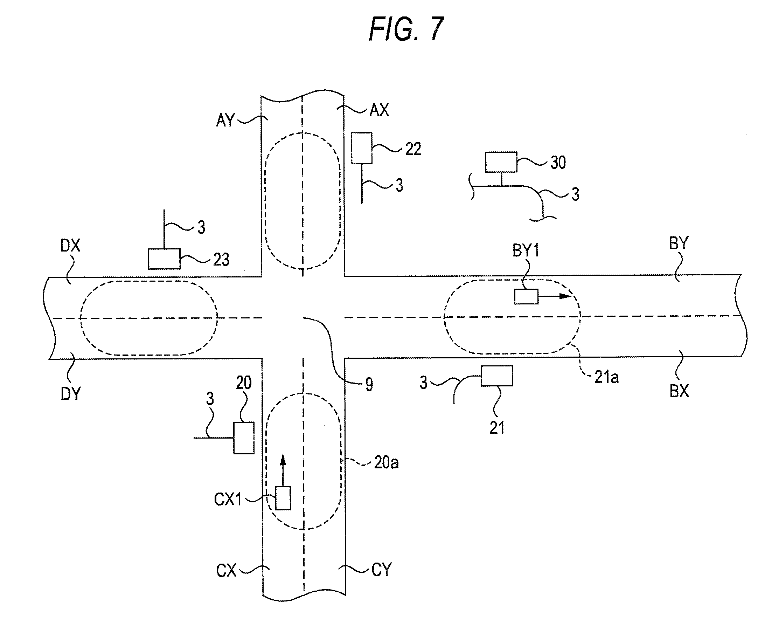

In Fig. 7, two both-way two traffic lane roads cross each other at an intersection 9, and for convenience of explanation, four roads connected to the intersection are referred to as A, B, C and D. Traffic lanes in the direction coming close to the intersection 9 are referred to as "X", and traffic lanes in the direction drawing away from the intersection are referred to as "Y". According to this, eight traffic lanes connecting to the intersection are referred to as AX, AY, BX, BY, CX, CY, DX and DY.

Base stations 20, 21, 22, and 23 are installed at respective roads which are appropriately apart from the intersection. The respective base stations have radio wave zones of 20a, 21a, 22a and 23a, respectively.

These base stations are connected through a not-shown traffic data output unit 30 through a network. For convenience of explanation, each of vehicles AX1, AY1, BX1, BY1, CX1, CY1, DX1, and DY1 exists in each radio wave zone of eight traffic lanes (only vehicles necessary for explanation are shown).

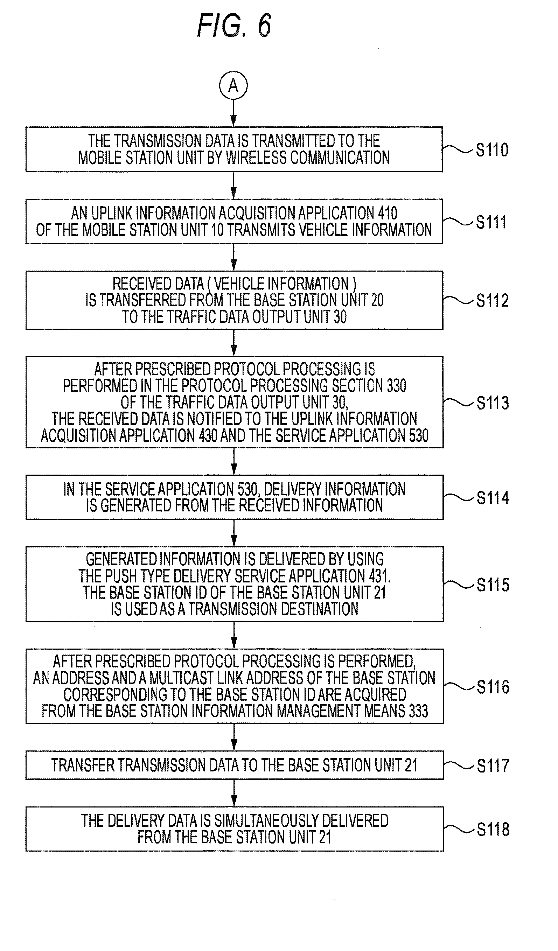

The flow of Fig. 5 in Embodiment 1 is executed in the same manner also in the case shown in Fig. 7. Concerning Step S115 of Fig. 6, the base station of the transmission destination is one station in Embodiment. 1, however, there are three base stations in Embodiment 2, therefore, the same explanation is not satisfying. A method of deciding the transmission destination in this case will be explained.

First, there is a method as the first method in which vehicle information acquired from one base station is simultaneously delivered from all other base stations (three stations in the drawing) . In this case, Step S115 to Step S117 are performed to respective base stations.

There is a method as the second method in which vehicle information acquired from one base station is simultaneously delivered only from particular base stations requiring the vehicle information. In this case, as a method of deciding the base station which delivers information, for example, there is a method of determining a road (base station) requiring the information according to the contents of the acquired vehicle information to decide the base station. For example, when information that the CX1 gives a left-turn signal is acquired, the information is necessary only to vehicles driving on the BX, therefore, it can be considered that a method in which the information is delivered only from the base station 21 or a method in which the information is not delivered from any base station when the vehicle travels in the direction away from the intersection 9 in the vehicle information.

As a third method, there is a method in which information is individually delivered to only a vehicle requiring the information. In this case, the sequence of acquiring vehicle information (Step S101 to Step S113) is performed by all base station unit, and combinations of acquired vehicle information and mobile station IDs are stored in the traffic data output unit, then, Step S115 to S117 are performed to mobile station IDs of all vehicles (for example, vehicles traveling in the direction coming close to the intersection 9) requiring the acquired vehicle information in information stored in the traffic data output unit to realize the method.

### Embodiment 3

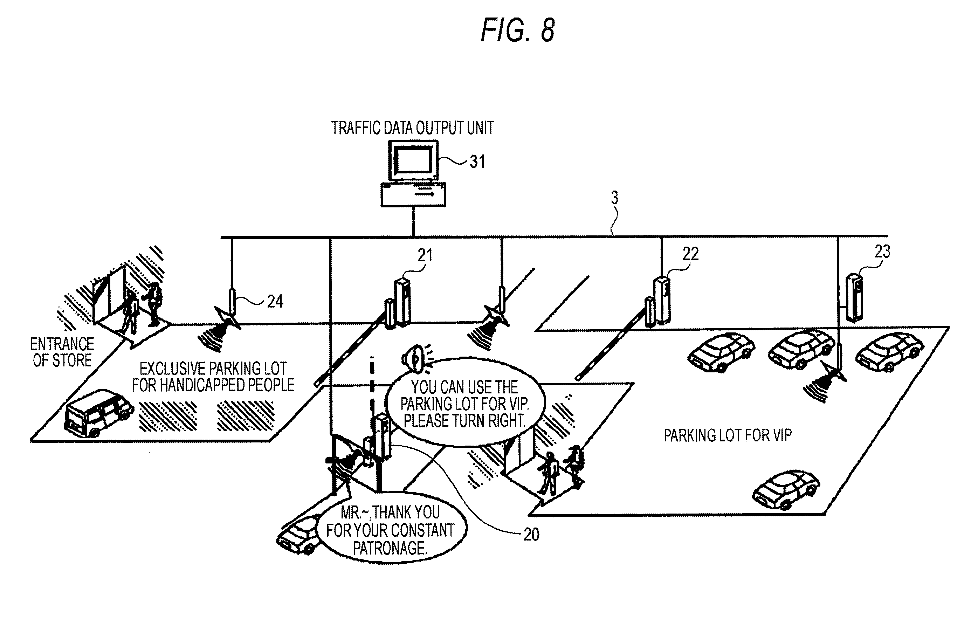

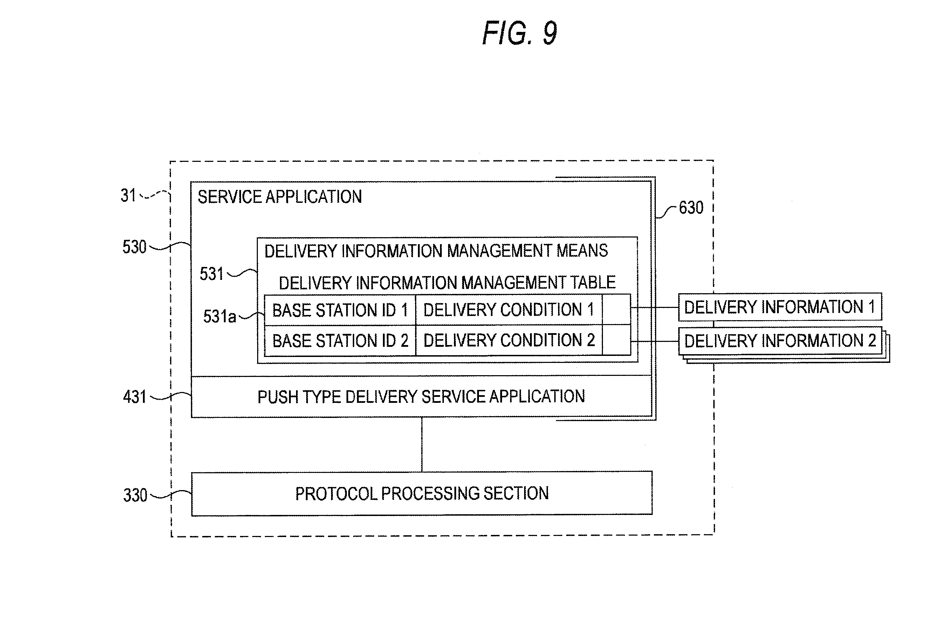

Fig. 8 is an explanatory view explaining the whole configuration of a vehicle wireless communication system according to Embodiment 3 of the invention and a case in which the system is used. Fig. 9 is a block diagram for explaining functional elements of a traffic data output unit 31 in the vehicle wireless communication system of Fig. 8.

In the present embodiment, an example of a service in which guidance of unoccupied areas, delivery of advertisement and the like are performed in a parking lot is shown, which is performed by delivering different information according to respective radio wave zones by wireless communication depending on installed positions of many base station units 20, 21, 22, 23, and 24 installed in the parking lot when the mobile station enters respective radio wave zones. Since the scale of a network 3 is small in the example, a local network formed by so-called LAN can be used.

The parking lot is divided into three blocks, namely, an entrance/exit, a parking lot for VIP, and an exclusive parking lot for physically handicapped people. The base station 20 detected a vehicle entering into the parking lot transmits a mobile station ID of the vehicle to the traffic data output unit 31, and the traffic data output unit 31 searches an owner name of the vehicle and whether the owner is a user entitled to use the parking lot for VIP from a user' s list which is previously stored, transmitting audio information which says "Hello, Mr.∼, thank you for your constant patronage" to the vehicle through the base station 20. Transmission is continued, which says, "You can use the parking lot for VIP. Please turn right". As a result of searching from the mobile station ID, the owner of the vehicle is a handicapped person, the traffic data output unit 31 transmits information which says "please turn left and use the exclusive parking lot". To the vehicle exiting, the unit transmits information which says "Thank you for coming, Mr.∼, we'll be waiting for next coming".

The base station units 23 is connected to a not-shown detection sensor detecting presence/absence of a parked vehicle, and unoccupied parking spaces can be captured. The traffic data output unit 31 judges whether the vehicle can be parked at the unoccupied space or not based on the information (comparing the width and the height with the size of the vehicle previously stored), transmitting information which says, for example, "Parking space No. 15 is unoccupied" through the base station unit 23, when the vehicle can be parked.

The base station unit 22 transmits and receives information for preventing a crash when passing each other as described in Embodiment 1 (in this case, a crash to a vehicle leaving the exclusive parking lot for physically handicapped people) by linkage with the base station 21 at the exclusive parking lot for physically handicapped people.

In the present embodiment, many base station units for delivering information are arranged as well as a delivery information management means 531 is provided on the traffic data output unit 31, in which base station IDs are linked with delivery information, delivery conditions and the like (vehicle-mounted unit IDs and information of owners of vehicles and the delivery contents in the past) (which means that IDs are combined with delivery information and delivery conditions to be previously stored). In this case, each configuration of base station units 20 to 24 to be installed is the same as the one explained in Embodiment 1.

The service application 530 of the application section 631 on the traffic data output unit 31 acquires delivery information from the delivery information management means 531, using the base station ID notified when the vehicle enters into the area as a key. At this time, it is possible to change the delivery information itself or to change part of the contents of delivery information according to delivery conditions stored in the delivery information management means 531. Specifically, the delivery information management means has information adding means selecting additional information in accordance with an identifier of the base station received at the time of receiving the vehicle information of the mobile station in additional information previously stored, adding the additional information to information delivered to the mobile station and delivering the information.

For example, in the case of driving to the parking lot for VIP via the base station unit 20 and base station unit 22 in Fig. 9, it becomes possible to deliver information other than guidance information by the base station unit 22 when there is no change in the guidance information received by the base station unit 20.

As described above, according to the invention, when a new service is added to the existing vehicle wireless communication system, the development for a dedicated base station unit or service application for the new service is not necessary. For example, even when installation of many base station units for delivering information or additional installation of the base station unit after the service is started is anticipated such as cases of guidance of unoccupied areas at a large-sized parking lot or a delivery service of advertisement information, the response can be given just by managing and adjusting the delivery information management means, therefore, maintenance property and extension property are excellent.

In the explanation of the present invention, the base station unit may be simply referred to as a base station. Also, the mobile station unit may be simply referred to as a mobile station.

### Industrial Applicability

The invention is applied to guidance at intersections and confluences of highways or local roads, parking areas, parking lots, inside of factories, guidance for ships in berths of harbors, providing various information to vehicles, which can be used for improvement of the safety thereof.

## Claims

1. A vehicle wireless communication system, comprising:
plural base stations installed along roads, each having a wireless section performing wireless communication with mobile stations mounted on vehicles and a modem connecting to a network, in which the modem outputs individual base station identification information and mobile station identification information received from the mobile stations to the network, and receives mobile station identification information as a transmission destination and service data through the network, and in which the wireless section transmits the service data to the mobile station based on the mobile station identification information as the transmission destination; and
an traffic service data output unit connected to the plural base stations through the network, including an application section including plural service data to be provided to the mobile station and selecting service data corresponding to the base station based on the base station identification information received from the base station, and a protocol processing section outputting service data selected by the application section to the base station having the base station identification information through the network, indicating the mobile station having the mobile station identification information received from the base station as a transmission destination.

2. The vehicle wireless communication system according to claim 1,
wherein, in the traffic service data output unit, the application section selects service data corresponding to the base station and the mobile station based on the base station identification information as well as mobile station identification information.

3. The vehicle wireless communication system according to claim 1,
wherein, in the traffic service data output unit, when the protocol processing section receives vehicle information of a mobile station from a base station, the application section generates delivery information from the vehicle information received by the protocol processing unit, and the protocol processing unit outputs the delivery information generated by the application section to the base station as a transmission destination through the network, and
wherein, in the base station, the modem receives the delivery information through the network and the wireless section simultaneously delivers delivery information received by the modem to mobile stations.

4. The vehicle wireless communication system according to claim 3,
wherein, in the traffic service data output unit, the protocol processing section outputs the delivery information to plural base stations through the network.

5. The vehicle wireless communication system according to claim 3,
wherein, in the traffic service data output unit, the protocol processing section outputs the delivery information to base stations other than the base station which has acquired the vehicle information through the network.

6. A traffic service data output unit connected to a network to which plural base stations are connected, which are installed along roads, each having a wireless section performing wireless communication with mobile stations mounted on vehicles and a modem outputting base station identification information and mobile station identification information received from the mobile stations, comprising:
an application section including plural service data to be provided to the mobile station and selecting service data corresponding to the base station based on the base station identification information received from the base station; and
a protocol processing section outputting service data selected by the application section to the base station having the base station identification information through the network, indicating the mobile station having the mobile station identification information received from the base station as a transmission destination.
